# EUROPÄISCHE PATENTSCHRIFT

(11) **EP 4 288 683 B1**
(45) Veröffentlichungstag und Bekanntmachung des Hinweises auf die Patenterteilung: **04.03.2026**
(21) Anmeldenummer: 22700312.6
(22) Anmeldetag: 06.01.2022
(51) Int. Cl.: F16L 23/08, F16L 23/00, F01D 25/24

(54) **FLANSCHVERBINDUNG UND TURBOLADER HIERMIT**
FLANGE CONNECTION AND TURBOCHARGER COMPRISING SAME
RACCORD À BRIDES ET TURBOCOMPRESSEUR LE COMPRENANT

(30) Priorität: 03.02.2021 DE 102021102524
(43) Veröffentlichungstag der Anmeldung: 13.12.2023
(73) Patentinhaber: NORMA Germany GmbH, 63477 Maintal (DE)
(72) Erfinder: OPLUSTIL, Julius, 69301 Hustopece (CZ); POLIVKA, Rudolf, 69301 Hustopece (CZ); DOLEZAL, Lukas, 69301 Hustopece (CZ); POLASEK, Lukas, 69301 Hustopece (CZ); ZUKAL, Jiri, 69301 Hustopece (CZ); REPKA, Martin, 69301 Hustopece (CZ)
(74) Vertreter: Patentanwälte Olbricht Buchhold Keulertz
(86) Internationale Anmeldenummer: PCT/EP2022/050193
(87) Internationale Veröffentlichungsnummer: WO 2022/167168

(56) Entgegenhaltungen:
- EP-A1- 1 600 680
- EP-A1- 3 825 594
- WO-A1-2020/037029
- DE-B3- 102019 112 884
- US-A1- 2018 223 692
- US-B2- 9 212 769

## Beschreibung

Die Erfindung betrifft eine Flanschverbindung mit einer Profilschelle gemäß dem Oberbegriff von Anspruch 1 sowie einen Turbolader mit einer solchen Flanschverbindung nach Anspruch 10.

Eine Profilschelle kann etwa zum fluiddichten Verbinden zweier Rohrenden oder zweier Gehäuse eingesetzt werden, die mit radial nach außen gerichteten Flanschen ausgestattet sind. Hierzu werden die Flansche zueinander positioniert und die Profilschelle mit einem spannbaren, geteilten Profilband auf die Flansche aufgesetzt. Die Flansche werden durch Spannen der Profilschelle zueinander fixiert, indem axiale und radiale Haltekräfte auf die Flansche einwirken. Ein Profilband der Profilschelle weist hierfür üblicherweise einen U-förmigen oder einen V-förmigen Querschnitt auf, der mit den Flanschen in Flächenkontakt gebracht wird. Eine gattungsgemäße Profilschelle wird beispielhaft in DE 10 2009 039 862 A1 gezeigt.

Nachteilhaft an einer solchen Schelle ist, dass Bauteile aufweisend die zu verbindenden Flansche in verschiedenen technischen Anwendungen aufgrund von Torsionskräften belastet sind. Diesen wird jedoch nicht durch die axialen und radialen Spannkräfte der Profilschelle hinreichend entgegengewirkt. So herrschen beispielsweise in der Verbindung zwischen einem Turbinengehäuse und einem Verdichtergehäuse eines Turboladers solche Torsionskräfte. Dies kann zu einem Verdrehen der verbundenen Bauteile relativ zueinander führen. Bei Turboladern werden hierzu hohe Spannkräfte der Profilschelle eingesetzt, mit denen genug Reibung erzeugt wird, um der Relativverdrehung entgegen zu wirken. Durch Kriechen, Dehnen, Temperaturschwankungen, Lösen von Verbindungsmitteln und dergleichen, können diese notwendigen hohen Spannkräfte jedoch mit der Zeit nachlassen.

Aus EP 1 600 680 A1 und WO 2020/037029 A1 sind jeweils Profilschellen bekannt, die nach innen ragende Federelemente aufweist. Beim Montieren der Profilschelle auf einer Verbindung zweier Flansche liegen die Federelemente auf dem Umfang der beiden Flansche auf und halten diese beim Spannen der Profilschelle in koaxialer Position zueinander.

DE 10 2019 112 884 B3 offenbart eine Profilschelle mit einem Zusatzelement, das eine Nase aufweist, welche vom Schellenumfang in Richtung Schellenzentrum ragt. Bei der Montage der Profilschelle auf einer Verbindung zweier Flansche greift die Nase in eine Aussparung in einer der zwei Flansche ein und bildet eine Verdrehsicherung zu diesem Flansch aus.

In US 9,212,769 B2 ist eine Profilschelle mit einem Schellenband beschrieben, die eine Lücke zwischen zwei Spannköpfen des Schellenbands aufweist. Diese Lücke wird mit einem separaten Brückenelemente derart geschlossen, dass das Schellenband 360 Grad umlaufend um eine Flanschverbindung herumführt. Zwischen dem Schellenband und dem Brückenelement ist eine Verbindung ausgebildet, die zwei Nasen am Schellenband aufweist, die in zwei Aussparungen im Brückenelement eingreifen.

US 2018/0223692 A1 gibt eine Flanschverbindung an, bei der eine Profilschelle mit einem Sicherungsmerkmal in zwei Aussparungen zweier gegenüberstehender Flansche eingreift, um eine Verdrehsicherung zwischen den Flanschen auszubilden. Die Profilschelle hat ein Schellenband mit zwei Spannköpfen. Dieses trägt auf der Innenseite festgelegte V-förmige Segmente, in denen gegenüberstehenden Flansche zum liegen kommen. Das Sicherungsmerkmal ist an einem dieser V-förmigen Segmente festgelegt.

Aufgabe der Erfindung ist es, technische Lösungen zu entwickeln, mit denen Torsionskräften zwischen zwei mittels einer Profilschelle verbundenen Bauteilflanschen besser, zuverlässig und dauerhaft entgegengewirkt wird. Die technischen Lösungen sollen zudem auf kleinstem Bauraum realisierbar und kostengünstig sein.

Hauptmerkmale der Erfindung sind im kennzeichnenden Teil von Anspruch 1, sowie in Anspruch 10 angegeben. Ausgestaltungen sind Gegenstand der Ansprüche 2 bis 9 sowie der Beschreibung.

Die Erfindung betrifft eine Flanschverbindung mit einem ersten und einem zweiten Bauteilflansch, die in einer Längsrichtung gegenüberstehend voneinander angeordnet sind, wobei eine Profilschelle die beiden Bauteilflansche miteinander verspannt. Die Profilschelle weist ein Profilband auf, das sich in einer Umfangsrichtung um ein Schellenzentrum erstreckt und zwei Spannköpfe aufweist, die über ein Spannelement miteinander verbunden sind, wobei auf einer Innenseite des Profilbands eine in Umfangsrichtung verlaufende Profilnut ausgebildet ist, die eine Profilbandsohle aufweist, die zumindest abschnittsweise zwischen Nutflanken angeordnet ist. Dabei ist vorgesehen, dass diese Profilschelle ein Sicherungsmerkmal auf der Innenseite des Profilbands aufweist, das von der Profilbandsohle in Richtung des Schellenzentrums ragt.

Der erste und zweite Bauteilflansch weisen jeweils eine Aussparung auf, wobei das Sicherungsmerkmal in die beiden Aussparungen ragt und dadurch eine Verdrehsicherung zwischen dem ersten und dem zweiten Bauteilflansch ausbildet.

Eine besonders preiswerte Ausgestaltung gelingt, indem das Sicherungsmerkmal einteilig mit dem Profilband ausgebildet ist, insbesondere durch Umformen. Damit sind in der Herstellung weniger Bauteile und Montageschritte notwendig. Außerdem sind die Nutflanken im Bereich eines Brückenabschnitts der Profilbandsohle unterbrochen und das Sicherungsmerkmal ragt im Bereich des Brückenabschnitts von der Profilbandsohle in Richtung des Schellenzentrums. Hier ist das Sicherungsmerkmal bei der Montage leicht zu lokalisieren und auszurichten.

Solch ein Brückenabschnitt erleichtert das Öffnen der Profilschelle bei der Montage. Er wirkt dann bevorzugt als Festkörpergelenk. Dabei ist das Profilband bevorzugt einteilig inklusive den beiden Spannköpfen ausgebildet. Der Brückenabschnitt kann aber auch eine Verbindung zwischen zwei Teilabschnitten des Profilbandes ausbilden. So ist es möglich, dass ein fest mit den zwei Teilabschnitten verbundenes Brückenelement ein Festkörpergelenk ausbildet oder aber eine bewegliche Verbindung zwischen den zwei Teilabschnitten ausgebildet ist.

Das Sicherungsmerkmal bildet somit durch Formschluss eine Verdrehsicherung der Profilschelle relativ zum ersten und zweiten Bauteilflansch und damit auch zwischen dem ersten und zweiten Bauteilflansch aus. Diese Verdrehsicherung bleibt auch dauerhaft erhalten, selbst wenn durch Kriechen, Dehnen, Temperaturschwankungen, Lösen von Verbindungsmitteln und dergleichen die Spannkraft der Profilschelle mit der Zeit nachlässt. Die Lösung kann grundsätzlich bei allen Anwendungen verwendet werden, bei denen ein Profilband zwei Bauteilflansche verbinden soll, zwischen denen höhere Anforderungen an den Schlupfdrehmomentwiderstand erforderlich sind.

Bei der Verbindung der zwei Bauteilflanschen lässt sich mit dieser Profilschelle sicherstellen, dass die Profilnut weiter axiale Klemmkräfte auf die Bauteilflansche aufbringen kann und die Bauteilflansche gegen ein Verschieben in Querrichtung sichert, während das Sicherungsmerkmal eine zusätzliche Verdrehsicherung der Profilschelle relativ zum ersten und zweiten Bauteilflansch und zwischen dem ersten und zweiten Bauteilflansch ausbildet. Diese Verdrehsicherung bleibt auch dauerhaft erhalten, selbst wenn durch Kriechen, Dehnen, Temperaturschwankungen, Lösen von Verbindungsmitteln und dergleichen die Spannkraft der Profilschelle mit der Zeit nachlässt.

Bei dieser Profilschelle kann die Profilnut einen V-förmigem oder U-förmigem Querschnitt aufweisen. Dies ist geometrisch einfach herzustellen und geeignet, die beiden Flansche mit Axialkraft in Längsrichtung gegeneinander zu verspannen.

Optional kann das Profilband einen V-förmigen oder U-förmigen Querschnitt aufweisen. Dies ist besonders einfach herstellbar. Weiterhin kann das Profilband aus Metall bestehen. Besonders preiswert gelingt eine Herstellung, wenn das Profilband durch Umformen einer Metallplatte hergestellt ist.

Gemäß einer Variante der Profilschelle weist das Sicherungsmerkmal einen ersten Sicherungspin auf, der von der Profilbandsohle in Richtung des Schellenzentrums ragt. Ein solcher Sicherungspin ist preiswert und reicht meist aus, um eine hinreichend stabile Verdrehsicherung auszubilden. Es ist bei den meisten Anwendungen nicht zu erwarten, dass die Torsionskräfte derart hoch sind, dass es zu einem Abscheren des Sicherungspins kommen könnte.

In einer besonderen Ausführungsform weist das Sicherungsmerkmal einen zweiten Sicherungspin auf, der in die Profilnut ragt, oder von der Profilbandsohle in Richtung des Schellenzentrums ragt, oder in die Profilnut und von der Profilbandsohle in Richtung des Schellenzentrums ragt, wobei der zweite Sicherungspin in Umfangsrichtung versetzt zum ersten Sicherungspin und/oder in einer quer zur Umfangsrichtung verlaufenden Längsrichtung der Profilschelle versetzt zum ersten Sicherungspin angeordnet ist.

Ein Versatz in Umfangsrichtung ist geeignet dazu, um die mit dem Sicherungsmerkmal aufnehmbaren Torsionskräfte zu erhöhen. Dies kann einerseits eine reine Verdopplung der aufnehmbaren Kräfte sein. Alternativ können die Sicherungspins auch für die Kraftaufnahme in einer der beiden Umfangsrichtungen ausgelegt sein. Dann können der erste und zweite Sicherungspin gegenläufig ausgerichtet werden, damit gleich große Torsionskräfte in beiden Umfangsrichtungen aufnehmbar sind.

Optional ist vorgesehen, dass der erste und/oder zweite Sicherungspin aus der Gruppe Bolzen, Stift, Zapfen, Zahn, Zinke, Dorn und Nocke ist.

Gemäß einer näheren Ausgestaltung sind die Aussparungen des ersten und zweiten Bauteilflansches sich gegenüberliegend angeordnet und bilden zusammen eine Sicherungsausnehmung aus, die eine radial nach außen weisende Einführöffnung ausbildet, wobei das Sicherungsmerkmal in die Sicherungsausnehmung ragt und dadurch eine Verdrehsicherung ausbildet, dass es sich in die Aussparungen des ersten und zweiten Bauteilflansches erstreckt.

Hierdurch gelingt zunächst auf einfache Weise eine Lageorientierung des ersten und zweiten Bauteilflansches bevor die Profilschelle montiert wird, indem die beiden Aussparungen zueinander positioniert werden. Zudem lässt sich mit einer einfach gestalteten Form des Sicherungsmerkmals eine direkte Verdrehsicherung zwischen dem ersten und zweiten Bauteilflansch ausbilden.

Die Bauteilflansche sollte je eine schräge Spannflanke aufweisen, die insbesondere mit der Querschnittsform der Profilnut korrespondieren und zum Spannen mit den Nutflanken in Anlage stehen.

Optional sind die Aussparungen derart tief ausgestaltet, dass in Richtung des Schellenzentrums weisende Aussparungssohlen der Aussparungen und das Sicherungsmerkmal beabstandet voneinander angeordnet sind. Damit kann die Profilschelle ohne mit den Aussparungssohlen zu kollidieren festgespannt werden.

In einer besonderen Ausführungsform sind die Aussparungen derart breit ausgestaltet, dass in Längsrichtung weisende Aussparungswandungen der Aussparungen und das Sicherungsmerkmal beabstandet voneinander angeordnet sind. Damit kollidiert das Sicherungsmerkmal auch nicht in Längsrichtung mit den Bauteilflanschen und es wird eine gleichmäßige Verspannung in Längsrichtung über dem Umfang der Bauteilflansche erzielt.

Es besteht außerdem eine Ausgestaltungsmöglichkeit derart, dass das Sicherungsmerkmal in Umfangsrichtung Spiel in den Aussparungen aufweist. Dieses Spiel erleichtert die Montage. Minimale Verdrehungen im Umfang des Spiels schaden außerdem in den wenigsten Anwendungsfällen.

Außerdem betrifft die Erfindung einen Turbolader mit einer Flanschverbindung wie sie vor- und nachstehend angegeben ist, wobei der erste Bauteilflansch und der zweite Bauteilflansch an je einem Bauteil aus der Gruppe Turbinengehäuse, optionalem Zwischengehäuse und Abnehmergehäuse ausgebildet sind, wobei sich eine Antriebsachse vom Turbinengehäuse durch die Flanschverbindung in das Abnehmergehäuse erstreckt, wobei die Antriebsachse von einem Turbinenrad im Turbinengehäuse angetrieben ist, und wobei die Antriebsachse einen Abnehmer im Abnehmergehäuse antreibt.

Insbesondere bei solchen Turboladern zahlt sich die einfach gestaltetet Verdrehsicherung mit der Profilschelle besonders aus. Diese lässt sich nämlich platz- und gewichtssparend ausführen, und die äußerst heißen Bauteile des Turboladers verändern ihre Position nicht durch eine Relativverdrehung im Motorraum. Hierdurch wird die gesamte Peripherie des Turboladers inklusive dessen Zu- und Ableitungen sowie elektrische Anschlüsse geschützt. Die thermischen Belastungen können der Verdrehsicherung auch nichts anhaben.

Im optionalen Zwischengehäuse kann insbesondere ein Lager mit oder ohne Dichtung für die Antriebsache angeordnet sein. Alternativ besteht auch die Option, dass ein Lager mit oder ohne Dichtung für die Antriebsache im Turbinengehäuse oder dem Abnehmergehäuse angeordnet sind.

Optional kann vorgesehen sein, dass der Turbolader zwei Flanschverbindungen aufweist, wie sie vor- und nachstehend angegeben ist, wobei der erste Bauteilflansch und der zweite Bauteilflansch der ersten der beiden Flanschverbindungen an einem Turbinengehäuse und einem Zwischengehäuse ausgebildet sind, und wobei der erste Bauteilflansch und der zweite Bauteilflansch der zweiten der beiden Flanschverbindungen an dem Zwischengehäuse und einem Abnehmergehäuse ausgebildet sind, wobei sich eine Antriebsachse vom Turbinengehäuse durch das Zwischengehäuse und die zwei Flanschverbindungen in das Abnehmergehäuse erstreckt, wobei die Antriebsachse von einem Turbinenrad im Turbinengehäuse angetrieben ist, und wobei die Antriebsachse einen Abnehmer im Abnehmergehäuse antreibt.

Sowohl bei Varianten mit einer Flanschverbindung als auch bei solchen mit zwei Flanschverbindungen sollte zwischen dem Turbinenrad und dem Abnehmer eine Dichtung im Turbinengehäuse und/oder im Abnehmergehäuse ausgebildet sein. Diese weist vorzugsweise eine Wellendurchführung für die Antriebsachse auf. Weiterhin verfügt das Turbinengehäuse bevorzugt über einen Abgaseingang und einen Abgasauslass.

Optional kann das Abnehmergehäuse einen Zuluftanschluss und einen Druckluftausgang aufweisen, wobei der Abnehmer ein Verdichterrad ist. Hierdurch kann komprimierte Verbrennungsluft bereitgestellt werden.

Alternativ oder ergänzend kann der Abnehmer ein Getriebe sein, insbesondere um einen Turbo-Compound-Motor auszubilden.

Weiterhin alternativ oder ergänzend kann der Abnehmer ein elektrischer Generator sein.

Auch Mischformen dieser unterschiedlichen Abnehmer sind also denkbar.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Querschnitt durch eine Flanschverbindung mit einer Profilschelle;
- Fig. 2: eine perspektivische Ansicht der Profilschelle nach Fig. 1;
- Fig. 3: eine perspektivische Ansicht einer Profilschelle, die nicht zum Schutzbereich der Ansprüche gehört;
- Fig. 4: einen perspektivischen Querschnitt durch eine Flanschverbindung mit einer Profilschelle, die nicht zum Schutzbereich der Ansprüche gehört;
- Fig. 5: einen Ausschnitt eines Abnehmergehäuses mit einem zweiten Bauteilflansch;
- Fig. 6: einen Ausschnitt eines Querschnitts durch den ein Abnehmergehäuse und ein Turbinengehäuse, die mit einem ersten und zweiten Bauteilflansch angrenzend aneinander angeordnet sind; und
- Fig. 7: eine teiltransparente Darstellung eines Turboladers.

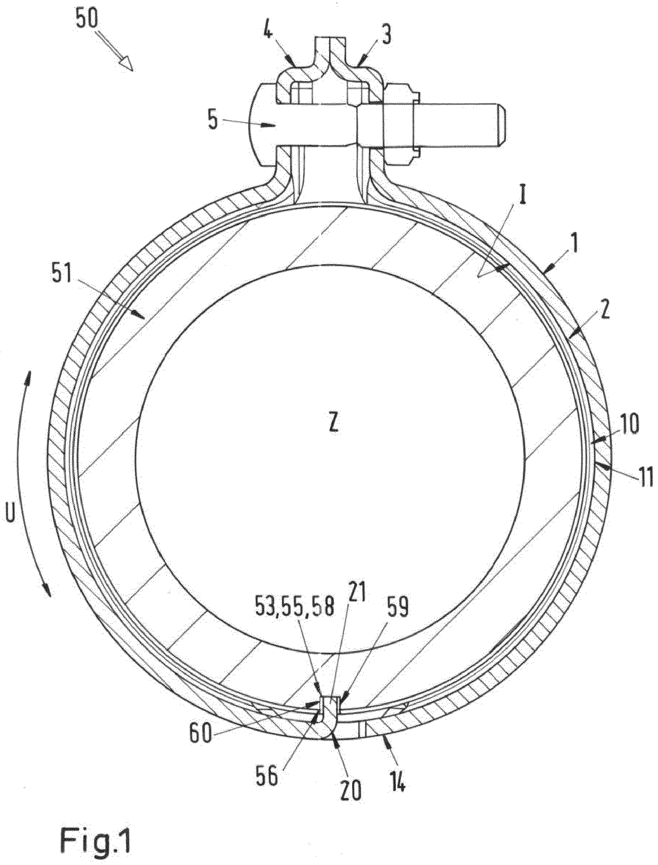

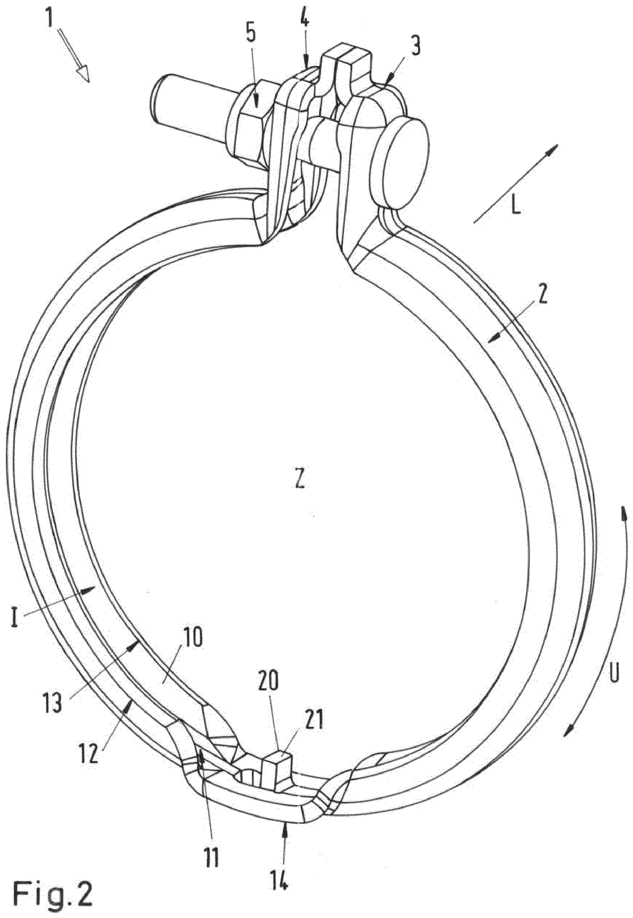

**Fig. 1** zeigt einen Querschnitt durch eine Flanschverbindung 50 mit einer Profilschelle 1. Diese Profilschelle ist in **Fig. 2** in einer perspektivischen Ansicht dargestellt. Gleiche Bezugsziffern betreffen daher gleiche Merkmale und werden gemeinsam beschrieben.

Die Profilschelle 1 besteht im Wesentlichen aus einem Profilband 2, das sich in einer Umfangsrichtung U um ein Schellenzentrum Z erstreckt und zwei Spannköpfe 3, 4 aufweist. Die zwei Spannköpfe 3, 4 sind über ein Spannelement 5, nämlich eine Schraube mit Mutter, miteinander verbunden.

Auf einer Innenseite I des Profilbands 2 ist eine in Umfangsrichtung U verlaufende Profilnut 10 ausgebildet. Die Profilnut 10 weist eine Profilbandsohle 11 auf, die abschnittsweise zwischen Nutflanken 12, 13 angeordnet ist. Hierdurch weist die Profilnut 10 einen V-förmigem Querschnitt auf, der bei größerer Breite und runderer Form auch als U-förmig angesehen werden kann. Das Profilband 2 ist durch Umformen einer Metallplatte hergestellt, wobei auch das Profilband 2 als solches einen V-förmigen bzw. U-förmigen Querschnitt aufweist.

Im Bereich eines Brückenabschnitts 14 der Profilbandsohle 11 sind die Nutflanken 12, 13 unterbrochen. Der Brückenabschnitt 14 liegt in Umfangsrichtung U gegenüber von den Spannköpfen 3, 4 und bildet ein flexibles Festkörpergelenk.

Die Profilschelle 1 weist im Bereich des Brückenabschnitts 14 ein Sicherungsmerkmal 20 auf der Innenseite I des Profilbands 2 auf, das sich von der Profilbandsohle 11 in Richtung des Schellenzentrums Z erstreckt. Bei dem Sicherungsmerkmal 20 handelt es sich um einen ersten Sicherungspin 21, der von der Profilbandsohle 11 in Richtung des Schellenzentrums Z ragt. Dieser Sicherungspin 21 ist als Zahn oder Zinke einteilig durch Umformen mit dem Profilband 2 ausgebildet.

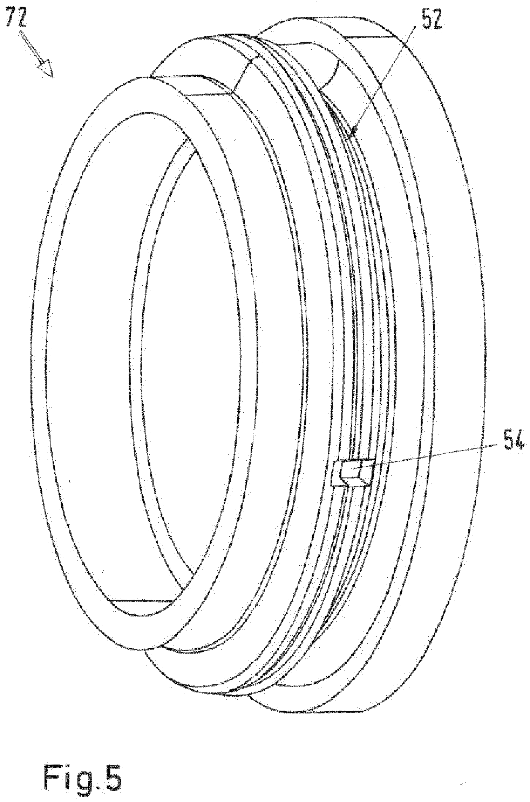

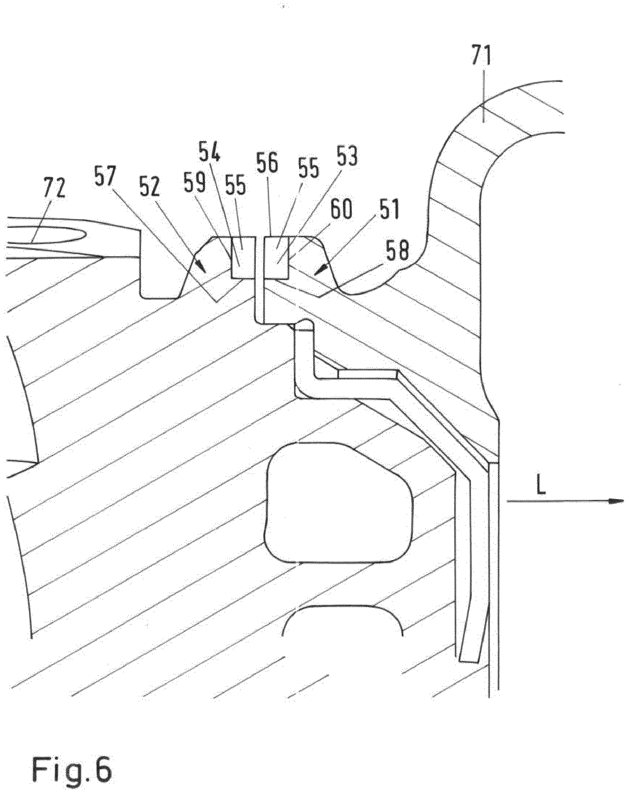

Wie nunmehr aus der Flanschverbindung 50 der Fig. 1 hervorgeht, greift das Sicherungsmerkmal 20, nämlich der Sicherungspin 21 in eine Aussparung 53 ein. Zunächst wird daher der Aufbau der Bauteilflansche 51, 52 näher anhand der Fig. 5 und 6 beschrieben.

Gemäß Fig. 6 sind ein erster und ein zweiter Bauteilflansch 51, 52 in einer Längsrichtung L gegenüberstehend voneinander angeordnet. Die Bauteilflansche 51, 52 haben je eine schräge Spannflanke, die insbesondere mit der Querschnittsform der Profilnut 10 korrespondieren und zum Spannen mit den Nutflanken 12, 13 in Anlage stehen.

Der erste und zweite Bauteilflansch 51, 52 weisen jeweils eine Aussparung 53, 54 auf, wobei die Aussparung 54 des zweiten Bauteilflansches 52 in perspektivischer Ansicht auch aus Fig. 6 entnehmbar ist. Die Aussparungen 53, 54 des ersten und zweiten Bauteilflansches 51, 52 sind sich in Längsrichtung L gegenüberliegend angeordnet und bilden zusammen eine Sicherungsausnehmung 55 mit einer radial nach außen weisenden Einführöffnung 56 aus.

In diese Sicherungsausnehmung 55 nach Fig. 6 greift nunmehr das Sicherungsmerkmal 20 gemäß Fig. 1 ein und bildet so eine Verdrehsicherung zwischen dem ersten und zweiten Bauteilflansch 51, 52 aus, indem es sich in die Aussparungen 53, 54 des ersten und des zweiten Bauteilflansches 51, 52 erstreckt. Die Profilschelle 1 verspannt zudem die beiden Bauteilflansche 51, 52 miteinander. Das Verspannen erfolgt vor allem in Längsrichtung L. Quer zur Längsrichtung L sind die Bauteilflansche 51, 52 dadurch lagefixiert, dass das Bauteil 72 mit dem zweiten Bauteilflansch 52 mit einer Passung in dem Bauteil 71 mit dem ersten Bauteilflansch 52 steckt.

Die Aussparungen 53, 54 und damit auch die Sicherungsausnehmung 55 sind derart tief ausgestaltet, dass in Richtung des Schellenzentrums Z weisende Aussparungssohlen 57, 58 der Aussparungen 53, 54 und das Sicherungsmerkmal 20 auch nach dem Spannen noch geringfügig voneinander beabstandet angeordnet sind. Die Aussparungen 53, 54 sollten außerdem derart breit ausgestaltet sein, dass in Längsrichtung L weisende Aussparungswandungen 59, 60 der Aussparungen 53, 54 und das Sicherungsmerkmal 20 auch nach dem Spannen noch beabstandet voneinander angeordnet sind. Erkennbar hat das Sicherungsmerkmal 20 in Umfangsrichtung U etwas Spiel in den Aussparungen 53, 54.

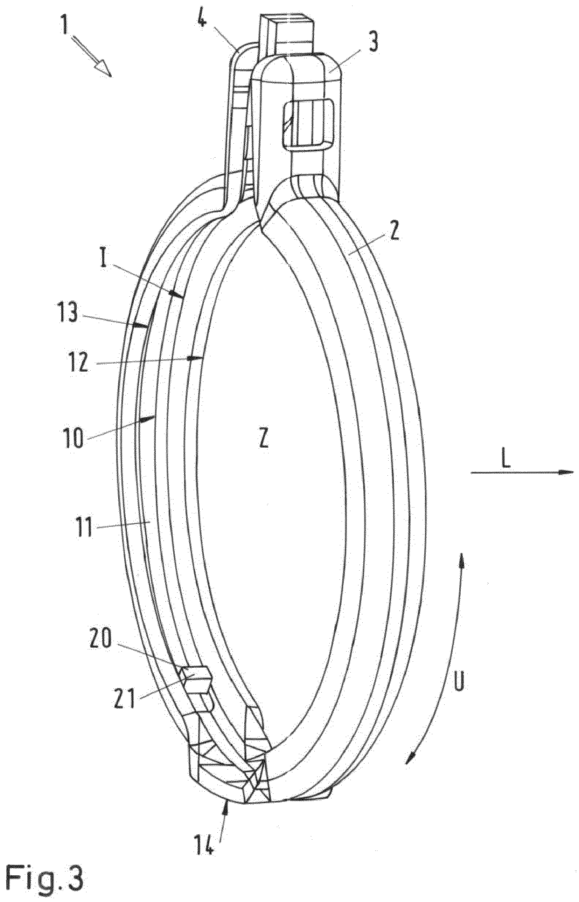

**Fig. 3** zeigt eine perspektivische Ansicht einer Profilschelle 1, die sich bezüglich des Sicherungsmerkmals 20 von der Ausführung der Fig. 1 und 2 unterscheidet und daher nicht zum Schutzbereich der Ansprüche gehört. Anstatt eines Sicherungsmerkmals 20 im Bereich des Brückenbereiches 14 weist die Profilschelle 1 nach Fig. 3 ein Sicherungsmerkmal 20 auf der Innenseite I des Profilbands 2 auf, das in die Profilnut 10 und dabei insbesondere von der Profilbandsohle 11 zwischen die Nutflanken 12, 13 ragt.

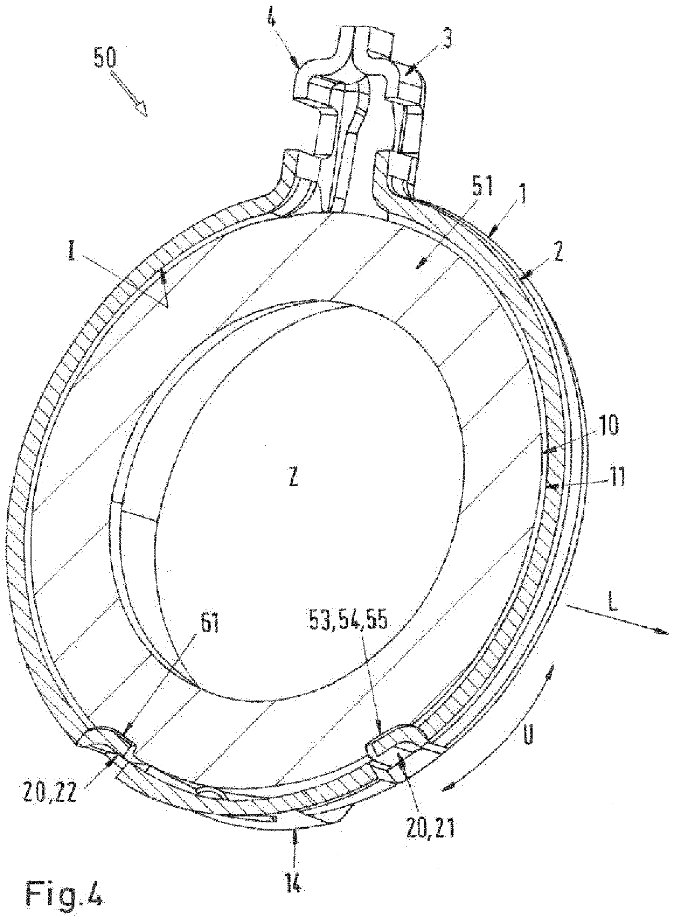

Auch die Profilschelle 1 nach **Fig. 4** unterscheidet sich hinsichtlich des Sicherungsmerkmals 20 und gehört nicht zum Schutzbereich der Ansprüche. Hier weist das Sicherungsmerkmal 20 einen ersten und einen zweiten Sicherungspin 21, 22 auf, die auf circa 1 Uhr und 11 Uhr relativ zum Brückenabschnitt 14 angeordnet sind, und die jeweils in die Profilnut 10 und von der Profilbandsohle 11 in Richtung des Schellenzentrums Z ragen. Damit sind der erste und zweite Sicherungspin 21, 22 in Umfangsrichtung U versetzt zueinander angeordnet. Zur Ausbildung der Verdrehsicherung korrespondiert auch der zweite Sicherungspin 22 mit einer Sicherungsausnehmung 61, die durch zwei in Längsrichtung L benachbarte Aussparungen in je einem der Bauteilflansche 51, 52 gebildet ist.

Bei dem Bauteil 71 mit dem ersten Bauteilflansch 51 der Fig. 6 handelt es sich um einen Ausschnitt eines Turbinengehäuses 71. Das Bauteil 72 mit dem zweiten Bauteilflansch 52 ist ein Ausschnitt eines Abnehmergehäuses 72.

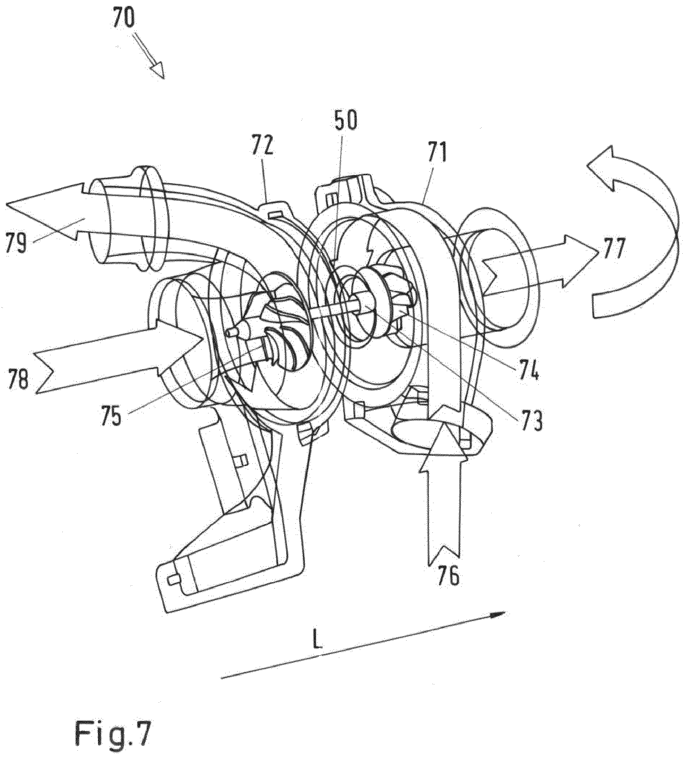

Turbinengehäuse 71 und Abnehmergehäuse 72 können zu einem Turbolader 70 gemäß Fig. 7 gehören, wobei das Turbinengehäuse 71 und Abnehmergehäuse 72 durch eine der vorstehend beschriebenen Flanschverbindungen 50 miteinander verbunden sind. In der teiltransparenten Darstellung des Turboladers 70 nach Fig. 7 erkennt man, dass sich eine Antriebsachse 73 vom Turbinengehäuse 71 durch die Flanschverbindung 50 in das Abnehmergehäuse 72 erstreckt. Die Antriebsachse 73 ist im Turbinengehäuse 71 von einem Turbinenrad 74 angetrieben. Im Abnehmergehäuse 72 treibt die Antriebsachse 73 einen Abnehmer 75, nämlich ein Verdichterrad an. Zwischen dem Turbinenrad 74 und dem Abnehmer 75 ist eine Dichtung im Turbinengehäuse 71 und/oder im Abnehmergehäuse 72 ausgebildet, sodass eine Verdichterkammer im Abnehmergehäuse 72 und eine Antriebskammer im Turbinengehäuse voneinander getrennt sind. In die Antriebskammer des Turbinengehäuses 71 mündet ein Abgaseingang 76 ein und ein Abgasauslass 77 aus. Auf der anderen Seite mündet ein Zuluftanschluss 78 in die Verdichterkammer des Abnehmergehäuses 72 ein und ein Druckluftausgang 79 aus der der Verdichterkammer aus.

Die Erfindung ist nicht auf eine der vorbeschriebenen Ausführungsformen beschränkt, sondern in vielfältiger Weise abwandelbar. So sind insbesondere die Anzahl und die Form der Sicherungsmerkmale und Ausnehmungen in den Bauteilflanschen vom Fachmann an die Zielsetzungen des konkreten technischen Einsatzes anpassbar.

### Bezugszeichenliste

| | | | |
|---|---|---|---|
| 1 | Profilschelle | 57 | Aussparungssohle |
| 2 | Profilband | 58 | Aussparungssohle |
| 3 | Spannkopf | 59 | Aussparungswandung |
| 4 | Spannkopf | 60 | Aussparungswandung |
| 5 | Spannelement | 61 | Sicherungsausnehmung |
| 10 | Profilnut | 70 | Turbolader |
| 11 | Profilbandsohle | 71 | Turbinengehäuse |
| 12 | Nutflanke | 72 | Abnehmergehäuse |
| 13 | Nutflanke | 73 | Antriebsachse |
| 14 | Brückenabschnitts | 74 75 | Turbinenrad Abnehmer |
| 20 | Sicherungsmerkmal | 76 | Abgaseingang |
| 21 | erster Sicherungspin | 77 | Abgasauslass |
| 22 | zweiter Sicherungspin | 78 79 | Zuluftanschluss Druckluftausgang |
| 50 | Flanschverbindung | | |
| 51 | erster Bauteilflansch | I | Innenseite |
| 52 | zweiter Bauteilflansch | L | Längsrichtung |
| 53 | Aussparung | U | Umfangsrichtung |
| 54 | Aussparung | Z | Schellenzentrum |
| 55 | Sicherungsausnehmung | | |
| 56 | Einführöffnung | | |

## Patentansprüche

1. **Flanschverbindung** (50) mit einem ersten und einem zweiten Bauteilflansch (51, 52), die in einer Längsrichtung (L) gegenüberstehend voneinander angeordnet sind, wobei eine Profilschelle (1) die beiden Bauteilflansche (51, 52) miteinander verspannt, wobei die Profilschelle (1) ein Profilband (2) aufweist, das sich in einer Umfangsrichtung (U) um ein Schellenzentrum (Z) erstreckt und zwei Spannköpfe (3, 4) aufweist, die über ein Spannelement (5) miteinander verbunden sind, wobei auf einer Innenseite (I) des Profilbands (2) eine in Umfangsrichtung (U) verlaufende Profilnut (10) ausgebildet ist, die eine Profilbandsohle (11) aufweist, die zumindest abschnittsweise zwischen Nutflanken (12, 13) angeordnet ist, und wobei die Profilschelle (1) ein Sicherungsmerkmal (20) auf der Innenseite (I) des Profilbands (2) aufweist, das von der Profilbandsohle (11) in Richtung des Schellenzentrums (7) ragt,
wobei der erste und zweite Bauteilflansch (51, 52) jeweils eine Aussparung (53, 54) aufweisen, wobei das Sicherungsmerkmal (20) in die beiden Aussparungen (53, 54) ragt und dadurch eine Verdrehsicherung zwischen dem ersten und dem zweiten Bauteilflansch (51, 52) ausbildet, und
wobei das Sicherungsmerkmal (20) einteilig mit dem Profilband (2) ausgebildet ist,
**dadurch gekennzeichnet, dass**
die Nutflanken (12, 13) im Bereich eines Brückenabschnitts (14) der Profilbandsohle (11) unterbrochen sind und das Sicherungsmerkmal (20) im Bereich des Brückenabschnitts (14) von der Profilbandsohle (11) in Richtung des Schellenzentrums (Z) ragt.

2. Flanschverbindung (1) nach Anspruch 1, **dadurch gekennzeichnet, dass** das Sicherungsmerkmal (20) einen ersten Sicherungspin (21) aufweist, der von der Profilbandsohle (11) in Richtung des Schellenzentrums (Z) ragt.

3. Flanschverbindung (50) nach Anspruch 2, **dadurch gekennzeichnet, dass** das Sicherungsmerkmal (20) einen zweiten Sicherungspin (22) aufweist, der in die Profilnut (10) und/oder von der Profilbandsohle (11) in Richtung des Schellenzentrums (Z) ragt, wobei der zweite Sicherungspin (22)
a) in Umfangsrichtung (U) versetzt zum ersten Sicherungspin (21) und/oder
b) in einer quer zur Umfangsrichtung (U) verlaufenden Längsrichtung (L) der Profilschelle (1) versetzt zum ersten Sicherungspin (21)
angeordnet ist.

4. Flanschverbindung (50) nach einem der Ansprüche 2 oder 3, **dadurch gekennzeichnet, dass** der erste und/oder zweite Sicherungspin (21, 22) aus der Gruppe Bolzen, Stift, Zapfen, Zahn, Zinke, Dorn und Nocke ist.

5. Flanschverbindung (50) nach einem der vorhergehenden Ansprüche, **dadurch gekennzeichnet, dass** das Profilband (2) einteilig inklusive den beiden Spannköpfen (3, 4) ausgebildet ist.

6. Flanschverbindung (50) nach einem der vorhergehenden Ansprüche, **dadurch gekennzeichnet, dass** die Aussparungen (53, 54) des ersten und zweiten Bauteilflansches (51, 52) sich gegenüberliegend angeordnet sind und zusammen eine Sicherungsausnehmung (55) ausbilden, die eine radial nach außen weisende Einführöffnung (56) ausbildet, wobei das Sicherungsmerkmal (20) in die Sicherungsausnehmung (55) ragt und dadurch eine Verdrehsicherung ausbildet, dass es sich in die Aussparungen (53, 54) des ersten und zweiten Bauteilflansches (51, 52) erstreckt.

7. Flanschverbindung (50) nach einem der vorhergehenden Ansprüche, **dadurch gekennzeichnet, dass** die Aussparungen (53, 54) derart tief ausgestaltet sind, dass in Richtung des Schellenzentrums (Z) weisende Aussparungssohlen (57, 58) der Aussparungen (53, 54) und das Sicherungsmerkmal (20) beabstandet voneinander angeordnet sind.

8. Flanschverbindung (50) nach einem der vorhergehenden Ansprüche, **dadurch gekennzeichnet, dass** die Aussparungen (53, 54) derart breit ausgestaltet sind, dass in Längsrichtung (L) weisende Aussparungswandungen (59, 60) der Aussparungen (53, 54) und das Sicherungsmerkmal (20) beabstandet voneinander angeordnet sind.

9. Flanschverbindung (50) nach einem der vorhergehenden Ansprüche, **dadurch gekennzeichnet, dass** das Sicherungsmerkmal (20) in Umfangsrichtung (U) Spiel in den Aussparungen (53, 54) aufweist.

10. **Turbolader** (70) mit einer Flanschverbindung (50) nach einem der vorhergehenden Ansprüche 1 bis 9, wobei der erste Bauteilflansch (51) und der zweite Bauteilflansch (52) an je einem Bauteil aus der Gruppe Turbinengehäuse (71), optionalem Zwischengehäuse und Abnehmergehäuse (72) ausgebildet sind, wobei sich eine Antriebsachse (73) vom Turbinengehäuse (71) durch die Flanschverbindung (50) in das Abnehmergehäuse (72) erstreckt, wobei die Antriebsachse (73) von einem Turbinenrad (74) im Turbinengehäuse (71) angetrieben ist, und wobei die Antriebsachse (73) einen Abnehmer (75) im Abnehmergehäuse (72) antreibt.

## Claims

1. Flange connection (50) comprising a first and a second component flange (51, 52) which are arranged opposite one another in a longitudinal direction (L), wherein a profile clamp (1) clamps the two component flanges (51, 52) together, wherein the profile clamp (1) comprises a profile strip (2) which extends in a circumferential direction (U) about a clamp centre (Z) and has two clamping heads (3, 4) which are connected to one another via a clamping element (5), wherein a profile groove (10) running in the circumferential direction (U) is formed on an inside (I) of the profile strip (2) and has a profile strip base (11) arranged at least in portions between groove flanks (12, 13), and wherein the profile clamp (1) has a securing feature (20) on the inside (I) of the profile strip (2), which protrudes from the profile strip base (11) in the direction of the clamp centre (7),
wherein the first and second component flanges (51, 52) each have a cutout (53, 54), wherein the securing feature (20) protrudes into the two cutouts (53, 54) and thereby prevents twisting between the first and the second component flanges (51, 52), and
wherein the securing feature (20) is formed integrally with the profile strip (2),
**characterized in that**
the groove flanks (12, 13) are interrupted in the region of a bridging portion (14) of the profile strip base (11), and the securing feature (20) protrudes from the profile strip base (11) in the direction of the clamp centre (Z) in the region of the bridging portion (14).

2. Flange connection (1) according to Claim 1, **characterized in that** the securing feature (20) has a first securing pin (21) which protrudes from the profile strip base (11) in the direction of the clamp centre (Z).

3. Flange connection (50) according to Claim 2, **characterized in that** the securing feature (20) has a second securing pin (22) which protrudes into the profile groove (10) and/or from the profile strip base (11) in the direction of the clamp centre (Z), wherein the second securing pin (22)
a) is offset to the first securing pin (21) in the circumferential direction (U), and/or
b) is offset to the first securing pin (21) in a longitudinal direction (L) of the profile clamp (1) running transversely to the circumferential direction (U).

4. Flange connection (50) according to one of Claims 2 or 3, **characterized in that** the first and/or second securing pin (21, 22) are from the group bolts, pins, pegs, teeth, tines, mandrels and cams.

5. Flange connection (50) according to any one of the preceding claims, **characterized in that** the profile strip (2) is formed integrally inclusive of the two clamping heads (3, 4).

6. Flange connection (50) according to any one of the preceding claims, **characterized in that** the cutouts (53, 54) of the first and second component flanges (51, 52) are arranged opposite one another and together form a securing recess (55) forming an insertion opening (56) facing radially outwards, wherein the securing feature (20) protrudes into the securing recess (55) and prevents twisting **in that** it extends into the cutouts (53, 54) of the first and second component flanges (51, 52).

7. Flange connection (50) according to any one of the preceding claims, **characterized in that** the cutouts (53, 54) are made sufficiently deep that cutout bases (57, 58) of the cutouts (53, 54) facing towards the clamp centre (Z) and the securing feature (20) are arranged spaced apart from one another.

8. Flange connection (50) according to any one of the preceding claims, **characterized in that** the cutouts (53, 54) are designed sufficiently wide that cutout walls (59, 60) of the cutouts (53, 54) facing in the longitudinal direction (L) and the securing feature (20) are arranged spaced apart from one another.

9. Flange connection (50) according to any one of the preceding claims, **characterized in that** the securing feature (20) has a play in the cutouts (53, 54) in the circumferential direction (U).

10. Turbocharger (70) with a flange connection (50) according to any one of the preceding Claims 1 to 9, wherein the first component flange (51) and the second component flange (52) are each formed on a component of the group turbine casing (71), optional intermediate casing and consumer casing (72), wherein a drive shaft (73) extends from the turbine casing (71) through the flange connection (50) into the consumer casing (72), wherein the drive shaft (73) is driven by a turbine wheel (74) in the turbine casing (71), and wherein the drive shaft (73) drives a consumer (75) in the consumer casing (72).

## Revendications

1. Liaison à bride (50) avec une première et une deuxième bride de composant (51, 52) qui sont agencées l'une en face de l'autre dans une direction longitudinale (L), un collier profilé (1) serrant les deux brides de composant (51, 52) entre elles, le collier profilé (1) présentant une bande profilée (2) qui s'étend dans une direction circonférentielle (U) autour d'un centre de collier (Z) et présente deux têtes de serrage (3, 4) reliées entre elles par l'intermédiaire d'un élément de serrage (5), une rainure profilée (10) s'étendant dans la direction circonférentielle (U) étant réalisée sur un côté intérieur (I) de la bande profilée (2), laquelle rainure présente un fond de bande profilée (11) agencé au moins par sections entre des flancs de rainure (12, 13), et le collier profilé (1) présentant une caractéristique de sécurité (20) sur le côté intérieur (I) de la bande profilée (2), qui dépasse du fond de bande profilée (11) en direction du centre de collier (7),
les première et deuxième brides de composant (51, 52) présentant chacune un évidement (53, 54), la caractéristique de sécurité (20) dépassant dans les deux évidements (53, 54) et réalisant ainsi une sécurité anti-rotation entre les première et deuxième brides de composant (51, 52), et
la caractéristique de sécurité (20) étant réalisée d'une seule pièce avec la bande profilée (2),
**caractérisée en ce que**
les flancs de rainure (12, 13) sont interrompus dans la zone d'une section de pont (14) du fond de bande profilée (11) et la caractéristique de sécurité (20) dépasse du fond de bande profilée (11) dans la zone de la section de pont (14) en direction du centre de collier (Z).

2. Liaison à bride (1) selon la revendication 1, **caractérisée en ce que** la caractéristique de sécurité (20) présente une première goupille de sécurité (21) qui dépasse du fond de bande profilée (11) en direction du centre de collier (Z).

3. Liaison à bride (50) selon la revendication 2, **caractérisée en ce que** la caractéristique de sécurité (20) présente une deuxième goupille de sécurité (22) qui dépasse dans la rainure profilée (10) et/ou depuis le fond de bande profilée (11) en direction du centre de collier (Z), la deuxième goupille de sécurité (22) étant agencée
a) en décalage par rapport à la première goupille de sécurité (21) dans la direction circonférentielle (U) et/ou
b) en décalage par rapport à la première goupille de sécurité (21) dans une direction longitudinale (L) du collier profilé (1) perpendiculaire à la direction circonférentielle (U).

4. Liaison à bride (50) selon l'une des revendications 2 ou 3, **caractérisée en ce que** la première et/ou la deuxième goupille de sécurité (21, 22) est choisie parmi le groupe comprenant un boulon, une tige, un tenon, une dent, une pointe, un mandrin et une came.

5. Liaison à bride (50) selon l'une des revendications précédentes, **caractérisée en ce que** la bande profilée (2) est réalisée d'une seule pièce, y compris les deux têtes de serrage (3, 4).

6. Liaison à bride (50) selon l'une des revendications précédentes, **caractérisée en ce que** les évidements (53, 54) des première et deuxième brides de composant (51, 52) sont agencés de manière opposée et réalisent ensemble un évidement de sécurité (55) qui réalise une ouverture d'insertion (56) orientée radialement vers l'extérieur, la caractéristique de sécurité (20) dépassant dans l'évidement de sécurité (55) et réalisant ainsi une sécurité anti-rotation en s'étendant dans les évidements (53, 54) des première et deuxième brides de composant (51, 52).

7. Liaison à bride (50) selon l'une des revendications précédentes, **caractérisée en ce que** les évidements (53, 54) sont conçus de manière à être suffisamment profonds pour que des fonds d'évidement (57, 58) des évidements (53, 54) orientés en direction du centre de collier (Z) et la caractéristique de sécurité (20) soient espacés les uns des autres.

8. Liaison à bride (50) selon l'une des revendications précédentes, **caractérisée en ce que** les évidements (53, 54) sont conçus de manière à être suffisamment larges pour que des parois d'évidement (59, 60) des évidements (53, 54) orientées dans la direction longitudinale (L) et la caractéristique de sécurité (20) soient espacées les unes des autres.

9. Liaison à bride (50) selon l'une des revendications précédentes, **caractérisée en ce que** la caractéristique de sécurité (20) présente un jeu dans la direction circonférentielle (U) dans les évidements (53, 54).

10. Turbocompresseur (70) avec une liaison à bride (50) selon l'une des revendications 1 à 9 précédentes, la première bride de composant (51) et la deuxième bride de composant (52) étant réalisées chacune sur un composant du groupe comprenant le carter de turbine (71), un carter intermédiaire optionnel et un carter d'utilisateur (72), un axe d'entraînement (73) s'étendant depuis le carter de turbine (71) à travers la liaison à bride (50) dans le carter d'utilisateur (72), l'axe d'entraînement (73) étant entraîné par une roue de turbine (74) dans le carter de turbine (71), et l'axe d'entraînement (73) entraînant un utilisateur (75) dans le carter d'utilisateur (72).
